# EUROPEAN PATENT APPLICATION

(11) **EP 1 905 305 A1**
(43) Date of publication of application: **02.04.2008**
(21) Application number: 06020681.0
(22) Date of filing: 01.10.2006
(51) Int. Cl.: A21B 1/48, A21B 1/26

(54) **Convection oven**

(71) Applicant: AASTED-MIKROVERK APS, 3520 Farum (DK)
(72) Inventor: Holger, Henrichs, 3500 Vaerlose (DK)
(74) Representative: Heiden, Finn

(57) **Abstract**

Indirectly heated convection oven (1) for bakery products comprising an elongated tunnel (7) with a conveyor belt (8) carrying the bakery products through the oven. A heat exchanger (5) with a tubular burner unit (9) and multiple tubes (12) circulating heated liquid or gas is arranged for heating up the proces air being directed to the tunnel.

The tubular burner unit (9) and the multiple tubes (12) are arranged extending in the longitudinal direction of the tunnel (7). The length of the unit as well as of the tubes are thereby made longer than by the prior art so that the heat exchange capacity is increased.

## Description

The present invention concerns the field of indirectly heated convection ovens for bakery products comprising an elongated tunnel with a conveyor belt carrying the bakery products through the oven. The ovens also comprise a heat exchanger with a tubular heating unit and multiple tubes circulating heated liquid or gas for heating up the process air passing on the outside of the tubes. The gas or liquid may for example be water. The heating unit may typically comprise a burner supplied with gas or oil. Blower means is arranged for circulating the heated process air. Connecting ducts for transporting the heated air into a top duct arranged in the tunnel above the conveyor and a lower duct arranged in the tunnel below the conveyor are also arranged, which upper and lower ducts comprise multiple nozzles for sending the heated process air in towards the conveyor belt carrying the products.

At known convection ovens the tubular heating chamber is then typically a tube part comprising a centrally arranged gas burner. The flame of the gas burner heats up the chamber of the tube part and the multiple tubes of the heat exchanger. The combustion gasses are removed via a flue system so that the gasses cannot come into contact with the bakery products. The blower means is circulating the heated air around the heat exchanger and into the ducts. A vacuum typically sucks the process air from inside the tunnel at the conveyor and returns it to the blower means where the air is reheated. The tube part as well as the multiple tubes of the heat exchanger of these known ovens are arranged extending perpendicular to the tunnel extension. Then, the construction width of the tunnel sets the ultimate limit for the maximum length of the heat exchanger and therefore of the length of the tubular heating chamber and of the multiple tubes. The size of the heat exchanger is then dictated by the width of the tunnel. Consequently, as the output of the heat exchanger corresponds to the length of it, the maximum output is always limited by the width of the actual tunnel in question.

The inventive convection oven is characterised in, that the tubular heating unit and the multiple tubes is arranged extending in the longitudinal direction of the tunnel. The length of the tubular heating unit as of the multiple tubes can then be constructed with a longer length, so that the important heat exchange area is enlarged. Consequently, the heat capacity of the heat novel heat exchanger is increased. In fact there is then no longer any limit for the design of the heat exchanger and the capacity thereof. The length of the heat exchanger could for example be doubled in comparison with the traditional known ovens and the capacity severely increased. The greater surface of the novel heat exchanger can also be utilised for achieving a remarkably lower consumption of gas amount in comparison to the known ovens when achieving the same temperatures and process environment in the tunnel. Also the noise level in the factory environment close to the oven is reduced severely. The burner noise is simply led straight to the fume.

The invention is explained further below by reference to preferred embodiments as well as the drawing, in which
fig. 1 discloses schematically in perspective an oven according to the invention,
fig. 2 the oven of fig. 1, seen partly in section,
fig. 3 schematically in perspective a vertical section of the heat exchanger of the oven,
fig. 4 same as in fig. 3 seen from the side,

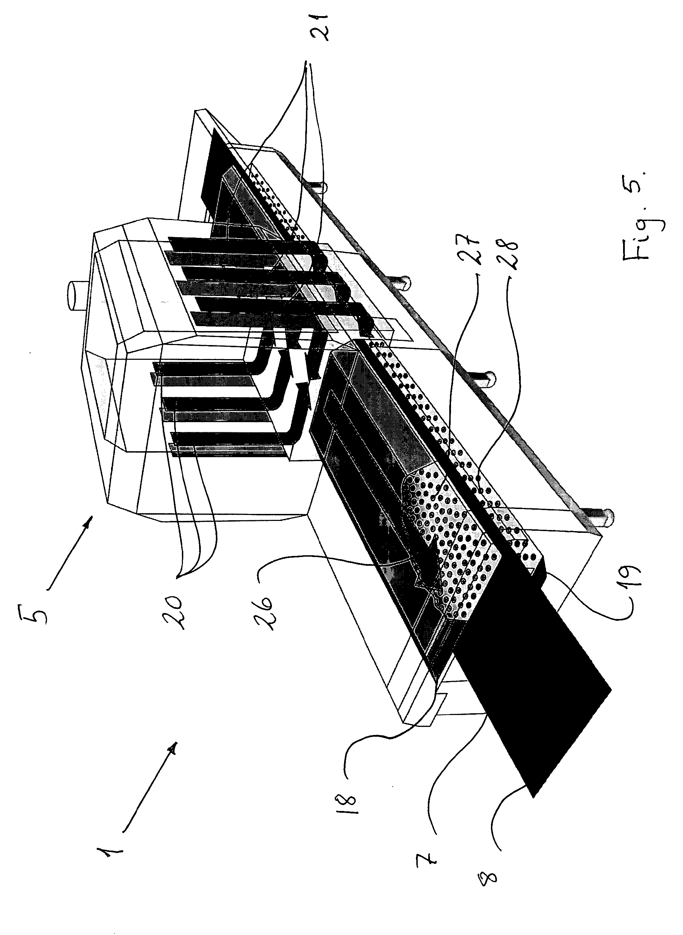

fig. 5 the oven of fig. 1, seen partly in section disclosing the ducts.

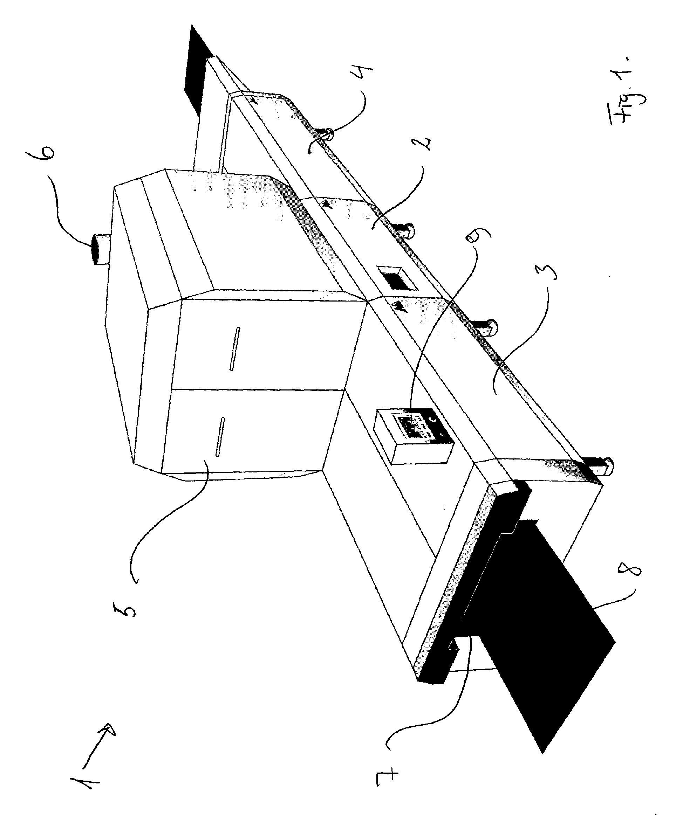

The inventive indirectly heated convection oven 1 schematically depicted in fig. 1 comprises an energy module 2 and two standard modules 3, 4. This combination all together makes one temperature zone which is controlled by the heat exchanger 5 of the energy module 2. The heat exchanger 5 is connected with a fume 6 for transportation of combustion gases to outside the factory environment. The energy module 2 and the two standar modules 3, 4 all together creates an elongated tunnel 7 through which runs a conveyor belt 8 carrying the bakery products through the oven 1.

An electronic control unit 9 controls the energy module, the conveyor speed as well as various airflow characteristika for the process air in the oven.

So when the products conveyor belt 8 runs through the particular temperature zone the baking process can be controlled to achieve the desired results. An oven may also comprise more than one such temperature zone, so that two or more energy modules are combined with a variabel number of standard modules in between to achieve the desired length of the oven for the particular production in question.

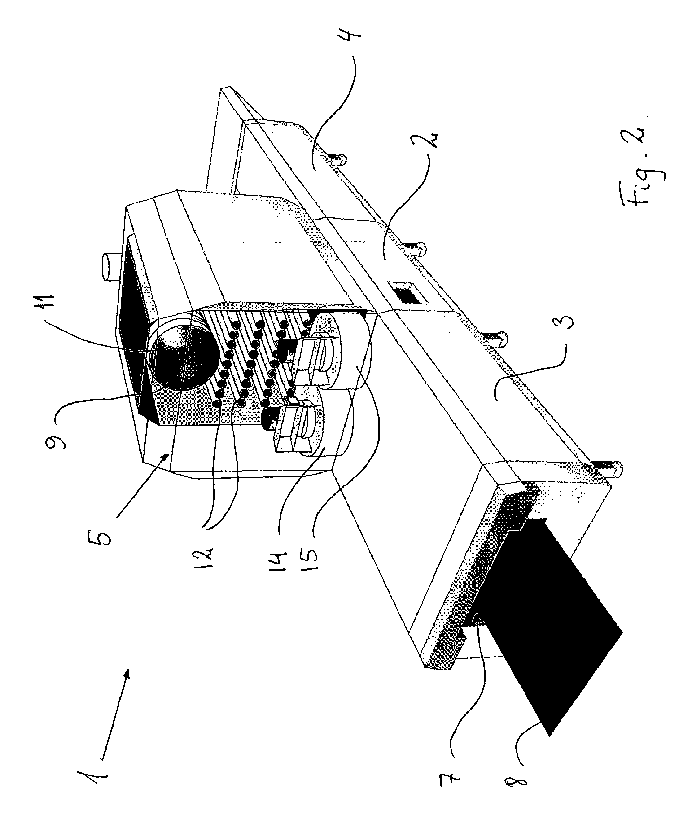

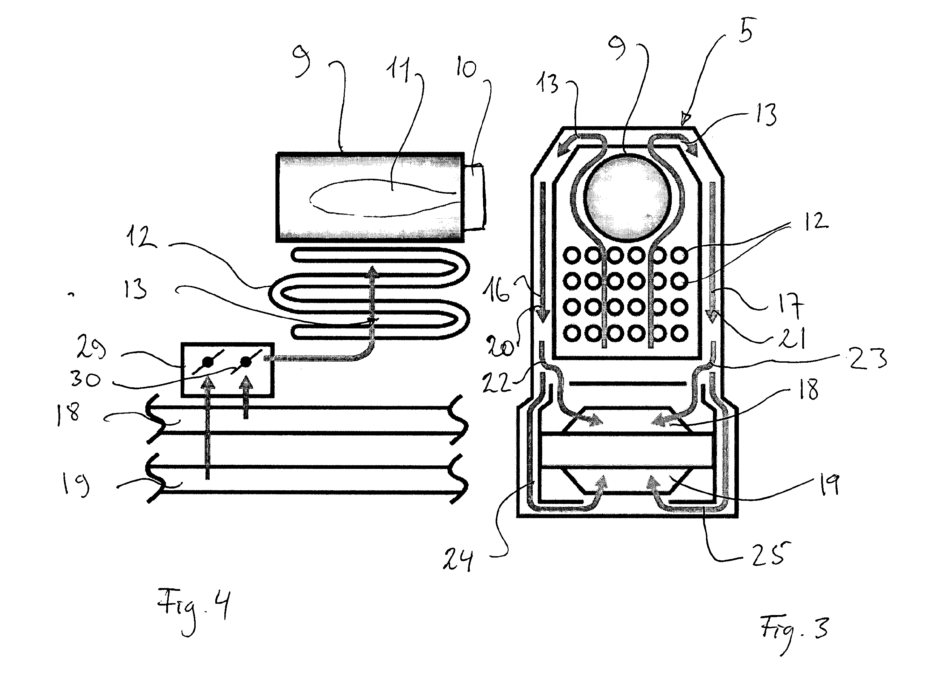

The heat exchanger 5 comprises a tubular heating unit 9 at the one end of which is arranged a gas burner 10 as depicted in figures 2, 3 and 4. The flame of the gasburner 10 extending centrally through the tube 9 is schematically depicted as 11. The heat exchanger 5 also comprises multiple, interconnected tubes 12 in which are circulated water or air in a closed circuit. The circulating water or air is being heated up by the heat from the gasburner flame 11. The proces air passing on the outside of the heating tube 9 and on the outside of the tubes 12 is then being heated as shown by the arrows 13. Blower means in the form of two fans 14, 15 is arranged for circulating the heated air.

The oven also comprises connecting ducts 16, 17 for transporting the heated proces air into a top duct 18 arranged in the tunnel 7 above the conveyor and into a lower duct 19 arranged arranged in the tunnel 7 below the conveyor 8. The airflow in the connecting ducts 16, 17 is schematically shown by the arrows 20, 21. The arrows 22, 23 shows the flow of air into the top duct 18 and the arrows 24, 25 shows the airflow into the lower duct 19 as shown in figue 3 and 5. In the upper and lower ducts 18, 19 the heated proces air is directed longitudinally towards the ends of the oven as depicted by the arrow 26.

The lower side of the upper duct 18 and the upper side of the lower duct 19 comprise multiple holes or nozzles 27, 28 distributed over the surface for the entry of the heated proces air into the tunnel 7. Louvers 29, 30 regulate the amount of air being directed to the upper and lower ducts 18,19.

By the present invention the tubular heating unit 9 and the multiple tubes 12 are arranged extending in the longitudinal direction of the tunnel 7. The length of especially the tubular heating unit 9 is then not being limited by the actual width of the energy module. Instead the length may be 10, 20 or 30 % longer than by the prior art so that the heat exchanging area of the unit is increased in the same amount. Also the length of the heatexchanging multiple tubes is incresed as desired. The total heatexchange capacity of the heat exchange unit is then increased. A severe saving in the consumed amount of gas is then the result. The diameter of the heating tube 9 can also be increased as desired as the unit 9 is arranged as the uppermost part of the oven. The heatexchange area may then also be furthermore increased by increasing the diameter of the unit.

By the novel oven the blower means comprise two separate, closely arranged fan units 14,15 being arranged to each side of the center line of the tunnel.

The improvement is, that the heated proces air is distributed evenly acros the width of the conveyor 8. By the prior art the only one fan arranged in the midth of the tunnel centerline creates a difference in the flow of proces air and therefore of the actual heating of the products in the center area in comparison with at the side areas.

## Claims

1. Indirectly heated convection oven (1) for bakery products comprising an elongated tunnel (7) with a conveyor belt (8) carrying the bakery products through the oven, a heat exchanger (5) with a tubular heating unit (9) and multiple tubes (12) circulating heated liquid or gas for heating up the air (13) passing on the outside of the tubular heating unit (9) and of the tubes (12), blower means (14,15) for circulating the heated air as well as connecting ducts (16,17) for transporting the heated air into a top duct (18) arranged in the tunnel (7) above the conveyor (8) and a lower duct (19) arranged in the tunnel (7) below the conveyor (8), which upper and lower ducts (18,19) comprise multiple nozzles (27,28) for sending the heated air in towards the conveyor belt (8),
**characterised in, that** the tubular heating unit (9) and the multiple tubes (12) are arranged extending in the longitudinal direction of the tunnel (7).

2. Convection oven according to claim 1, **characterised in, that** the blower means comprise two separate, closely arranged fan units (14,15).
